# EUROPÄISCHE PATENTSCHRIFT

(11) **EP 3 074 735 B1**
(45) Veröffentlichungstag und Bekanntmachung des Hinweises auf die Patenterteilung: **03.03.2021**
(21) Anmeldenummer: 14786613.1
(22) Anmeldetag: 18.10.2014
(51) Int. Cl.: G01G 21/28

(54) **WINDSCHUTZ FÜR EINE PRÄZISIONSWAAGE UND HÄNGEFÜHRUNG FÜR EINE SEITENSCHEIBE EINES WINDSCHUTZES**
WIND PROTECTION FOR A PRECISION SCALE AND SUSPENSION GUIDE FOR A SIDE PANEL OF A WIND PROTECTION
PARAVENT DESTINÉ À UNE BALANCE DE PRÉCISION ET GUIDE SUSPENDU POUR LA VITRE LATÉRALE D'UN PARAVENT

(30) Priorität: 25.11.2013 DE 102013113006
(43) Veröffentlichungstag der Anmeldung: 05.10.2016
(73) Patentinhaber: Sartorius Lab Instruments GmbH & Co. KG, 37079 Göttingen (DE)
(72) Erfinder: KUHLMANN, Otto, 37085 Göttingen (DE); LAUBSTEIN, Michael, 37077 Göttingen (DE); VON STEUBEN, Jan, 37075 Göttingen (DE)
(74) Vertreter: Vigand, Philippe
(86) Internationale Anmeldenummer: PCT/EP2014/002812
(87) Internationale Veröffentlichungsnummer: WO 2015/074732

(56) Entgegenhaltungen:
- EP-A1- 2 251 657
- US-A- 3 975 862

## Beschreibung

Die Erfindung betrifft einen Windschutz für eine Präzisionswaage nach Anspruch 1, der einen Wägeraum umgibt, mit zumindest einer Seitenscheibe, und einer Hängeführung für die Seitenscheibe, wobei die Hängeführung eine Führungsschiene und eine in der Führungsschiene verschiebbar gelagerte Haltevorrichtung für die Seitenscheibe aufweist, wobei die Haltevorrichtung eine Aufnahme für die Seitenscheibe aufweist sowie zumindest ein Führungselement, das in die Führungsschiene eingreift und in dieser verschiebbar gelagert ist, wobei die Seitenscheibe mit einem oberen Rand in der Haltevorrichtung der Hängeführung gehalten ist.

Es ist allgemein bekannt, an einer Präzisionswaage einen Windschutz anzubringen, der einen Raum oberhalb der Waagschale der Waage umgibt. Beispiele für einen solchen Windschutz finden sich in der DE 94 07 984 U1 sowie der EP 1 195 585 A1. Der Windschutz hat die Aufgabe, Beeinflussungen des Wiegevorgangs durch Luftbewegungen, durch elektrostatische Anziehungskräfte oder auch Wärmestrahlung zu verhindern. Um einen zu wiegenden Gegenstand auf die Waagschale legen zu können, weist ein solcher Windschutz zumindest eine Seitenscheibe auf, die zwischen einer geschlossenen und einer geöffneten Stellung verschoben werden kann.

Ein weiterer Windschutz ist in der EP 2 251 657 A1 gezeigt. Dieser weist Führungsmittel, beispielsweise Führungsschienen, für die Seitenscheibe auf, in denen die Seitenscheibe so gelagert ist, dass diese mit dem unteren Rand gegen den Boden des Windschutzes gedrückt wird. Die Seitenscheiben müssen aber vor dem Einhängen an den Führungsmitteln exakt ausgerichtet werden.

Aus der US 3,975,862 sind Schiebetüren bekannt, die so gelagert sind, dass sie sich gegenseitig abstützen und trotz fehlender bodenseitiger Führungsschiene in vertikaler Position verbleiben und nicht ineinander verhaken.

Um den Windschutz zu reinigen oder um einen ungehinderten Zugang zur Waagschale zu erhalten, ist es wünschenswert, diese Scheibe vollständig demontieren zu können, vorzugsweise ohne Einsatz von Werkzeugen. Andererseits muss die Seitenscheibe in der geschlossenen Stellung den Wägeraum vollständig abschließen, so dass Beeinflussungen des Wiegevorgangs durch Umwelteinflüsse zuverlässig verhindert sind.

Aufgabe der Erfindung ist es, einen Windschutz für eine Präzisionswaage bereitzustellen, der einfach und werkzeuglos zerlegbar ist und eine zuverlässige Abdichtung des Wägeraums sicherstellt, wobei außerdem eine einfache Demontage und Montage der Seitenscheibe möglich ist, aber auch eine sichere Führung und ein dichtes Schließen der Seitenscheibe.

Zur Lösung der Aufgabe ist bei einem Windschutz der eingangs genannten Art vorgesehen, dass das Führungselement bezüglich des Wägeraumes nach innen versetzt außerhalb einer Ebene angeordnet ist, die durch die Aufnahme der Seitenscheibe definiert ist, und dass die Haltevorrichtung um eine Kontaktlinie zwischen Führungselement und Führungsschiene verschwenkbar in der Führungsschiene gelagert ist, wobei die Ebene der Seitenscheibe bezüglich des Wägeraumes nach außen versetzt zur Führungsschiene angeordnet ist.

Die Seitenscheibe des Windschutzes kann in der Aufnahme der Haltevorrichtung befestigt werden, wobei die Seitenscheibe in der Ebene angeordnet ist, die durch die Aufnahme definiert ist. Da das Führungselement außerhalb der durch die Aufnahme und die Seitenscheibe gebildeten Ebene angeordnet, befindet sich das Führungselement seitlich versetzt zur Seitenscheibe. Somit ist das Führungselement außerhalb des Schwerpunktes einer aus Haltevorrichtung und Seitenscheibe bestehenden Baugruppe angeordnet. Wird diese Baugruppe in die Führungsschiene eingehängt, in der diese in Längsrichtung verschiebbar gelagert ist, hat diese Baugruppe die Neigung, um die Kontaktlinie des Führungselements auf der Führungsschiene nach innen zu kippen, bis sich der Schwerpunkt unterhalb der Kontaktlinie befindet.

Am Windschutz oder an der Präzisionswaage ist vorzugsweise eine Anlagefläche vorgesehen, an der der untere Rand der Seitenscheibe durch diese Kippneigung zur Anlage kommt bzw. gegen diese gedrückt wird. Die Anlagefläche ist vorzugsweise derart ausgebildet, dass die Seitenscheibe flächig mit dem unteren Rand anliegt, so dass der untere Rand durch die Anlage der Seitenscheibe an der Anlagefläche dicht abgeschlossen ist. Durch die Anlagefläche, die vorzugsweise parallel zur Führungsschiene verläuft, ist also ein dichter Abschluss am unteren Rand der Seitenscheibe möglich, ohne dass zusätzliche Führungen oder Dichtungselemente erforderlich sind. Die Abdichtung erfolgt selbstständig durch die Schwerkraft, durch die der untere Rand gegen die Anlagefläche gedrückt wird.

Da die Anlagefläche vorzugsweise in Richtung der Führungsschiene verläuft, kann diese zudem als Führung für die Seitenscheibe dienen, um den unteren Rand der Seitenscheibe zwischen der geöffneten und der geschlossenen Position zu führen. Eine Anordnung einer weiteren Führungsschiene am unteren Rand der Seitenscheibe ist nicht erforderlich. Eine ebene Anlagefläche, an der die Seitenscheibe anliegen kann, ist also sowohl als Führung als auch zur dichten Anlage vollkommen ausreichend.

Da die Baugruppe aus Seitenscheibe und Haltevorrichtung am unteren Rand des Windschutzes lediglich an der Anlagefläche anliegt und nicht mit dem unteren Rand gehalten wird, ist zudem eine einfache Demontage der Seitenscheibe möglich. Die Seitenscheibe muss hierfür lediglich aus der am oberen Rand angeordneten Hängeführung ausgehängt werden, beispielsweise, indem diese nach oben aus der Führungsschiene herausgehoben wird. Auch die Montage der Seitenscheibe ist wesentlich vereinfacht, da es lediglich erforderlich ist, die Haltevorrichtung in die Führungsschiene einzuhängen. Eine zusätzliche Montage oder ein Einfädeln des unteren Randes der Seitenscheibe in einer unteren Führung ist nicht erforderlich. Die Seitenscheibe gelangt durch die Kippneigung selbstständig mit der Anlagefläche in Kontakt, so dass eine Ausrichtung des unteren Randes der Seitenscheibe nicht erforderlich ist.

Durch diese Anordnung der Führungselemente ist also sichergestellt, dass diese außerhalb des Schwerpunktes der Baugruppe aus Haltevorrichtung und Seitenscheibe angeordnet sind, so dass diese Baugruppe nach einem Einhängen in die Führungsschiene eine Kippneigung gegen eine Anlagefläche aufweist.

Vorzugsweise ist am Windschutz eine Anlagefläche vorgesehen, an der der untere Rand der Seitenscheibe anliegen kann, wobei die Anlagefläche parallel zur Ebene der Seitenscheibe angeordnet ist. Vorzugsweise ist die Anlagefläche so angeordnet, dass die Ebene der Seitenscheibe in montiertem Zustand der Seitenscheibe im Wesentlichen senkrecht verläuft. Die Anlagefläche dient sowohl als Anschlag für die Seitenscheibe, um den unteren Rand der Seitenscheibe abzudichten, als auch als Führungsfläche, an der die Seitenscheibe entlanggleiten kann, um diese zwischen der geschlossenen und der geöffneten Stellung zu verschieben.

Die Anschlagfläche ist beispielsweise bezüglich einer Vertikalen durch die Führungsschiene in Richtung zur Seitenscheibe versetzt angeordnet, so dass die Seitenscheibe durch die Schwerkraft gegen diese gedrückt wird. Somit ist eine Druckkraft der Seitenscheibe gegen die Anlagefläche gewährleistet, wodurch eine zuverlässige Abdichtung des unteren Randes der Seitenscheibe sichergestellt ist.

Auch wenn die Seitenscheibe aufgrund des zur Kontaktlinie versetzten Schwerpunkts gegen die Anlagefläche gedrückt wird, kann zusätzlich ein Führungsfortsatz vorgesehen sein, der den unteren Rand der Seitenscheibe an der Anlagefläche hält.

Vorzugsweise weist der Windschutz einen Deckel auf, der den Wägeraum nach oben hin abschließt. Die Führungsschienen können beispielsweise am Deckel vorgesehen sein. Der Deckel kann beispielsweise auch mehrteilig ausgebildet sein, so dass beispielsweise das Abdeckelement durch einen Teil des Deckels gebildet ist.

Um eine Beeinflussung der Messergebnisse durch eine elektrostatische Aufladung des Windschutzes zu verhindern, sind die Seitenscheibe und/oder die Hängeführung elektrisch leitend ausgebildet und/oder beschichtet und miteinander elektrisch leitend gekoppelt, so dass eine elektrostatische Ladungen abgeleitet werden können.

Um eine einfache Montage und Demontage der Seitenscheibe zu ermöglichen, weist die Führungsschiene beispielsweise eine nach oben offene Nut auf, in die das zumindest eine Führungselement auf einfache Weise von oben eingehängt werden kann. Die Haltevorrichtung mit der Seitenscheibe kann also einfach nach oben aus der Führungsschiene entnommen werden. Somit ist eine einfache Demontage ohne zusätzliches Werkzeug möglich. Gleichzeitig ist eine sichere Führung der Haltevorrichtung und somit der Seitenscheibe gewährleistet, da die Führungselemente nicht seitlich aus der Führungsschiene kippen können.

Die Führungselemente der Haltevorrichtung können beispielsweise Rollen sein, die auf der Führungsschiene abrollen. Durch die Rollen ist ein geringer Widerstand beim Verschieben der Seitenscheibe bzw. der Haltevorrichtung zwischen der geöffneten Stellung und der geschlossenen Stellung möglich. Zudem ist durch die Form der Rollen eine sehr schmale Kontaktlinie möglich, um die die Haltevorrichtung kippen kann. Durch eine entsprechende Lagerung der Rollen, beispielsweise Kugellager, kann der Rollwiderstand weiter gesenkt werden.

Die Haltevorrichtung kann vorzugsweise zur Demontage der Seitenscheibe nach oben aus der Führungsschiene entnommen werden. Um eine versehentliche Demontage der Seitenscheibe zu verhindern, ist beispielsweise ein Abdeckelement vorgesehen, das die Führungsschiene abdeckt. Dieses Abdeckelement ist derart ausgebildet, dass dieses in einer Haltestellung die Führungsschiene und das Führungselement derart abdeckt, dass das Führungselement nicht aus der Führungsschiene entnommen werden kann. Erst wenn das Abdeckelement entfernt oder in eine Freigabestellung bewegt wurde, in der die Führungsschiene nicht mehr abgedeckt ist, kann das Führungselement aus der Führungsschiene entnommen werden.

Weitere Vorteile und Merkmale finden sich in der nachfolgenden Beschreibung in Verbindung mit den beigefügten Zeichnungen. In diesen zeigen:
Figur 1 in einer perspektivischen Ansicht eine Waage mit einem erfindungsgemäßen Windschutz,
- Figur 2 die Waage aus Figur 1 mit den Seitenscheiben in der geöffneten Stellung und entfernter Frontscheibe,
- Figur 3 eine perspektivische Ansicht der Waage aus Figur 1 mit teilweise geöffnetem Deckel,
- Figur 4 den Windschutz aus Figur 3 aus einer zweiten Perspektive,
- Figur 5 in einer perspektivischen Ansicht einen Trägerrahmen eines Deckels des Windschutzes aus Figur 1 mit Führungsschienen einer Hängeführung eines erfindungsgemäßen Windschutzes,
- Figur 6 in einer perspektivischen Unteransicht ein Abdeckelement für eine Hängeführung eines erfindungsgemäßen Windschutzes,
- Figur 7 eine Seitenansicht der Waage aus Figur 1, die im Bereich der Hängeführung und des Deckels teilgeschnitten ist,
- Figur 7a eine Teilansicht der Waage aus Figur 7 im Bereich der Hängeführung und des Deckels,
- Figur 8 in einer perspektivischen Ansicht eine Seitenscheibe der Waage aus Figur 1 mit einer Haltevorrichtung einer Hängeführung eines erfindungsgemäßen Windschutzes,
- Figur 9 die Haltevorrichtung aus Figur 8 in einer Detailansicht,
- Figur 10 die Haltevorrichtung aus Figur 8 in einer Detailansicht,
- Figur 11 eine Schnittansicht durch die Haltevorrichtung aus Figur 8 im Bereich eines Führungselements,
- Figur 12 eine Schnittansicht durch den Windschutz der Waage aus Figur 1 im Bereich der Seitenscheibe,
- Figur 13 eine Detailansicht der Anlagefläche des Windschutzes der Waage aus Figur 1,
- Figur 14 die Waage aus Figur 1 mit entferntem Abdeckelement,
- Figur 15 in einer perspektivischen Ansicht den Wägeraumboden der Präzisionswaage aus Figur 1,
- Figur 16 eine Rückansicht des Wägeraumbodens aus Figur 15,
- Figur 17 die Präzisionswaage aus Figur 1 mit teilweise demontiertem Wägeraumboden, und
- Figur 18 eine zweite Ansicht der Präzisionswaage aus Figur 17 mit entfernter Frontscheibe.

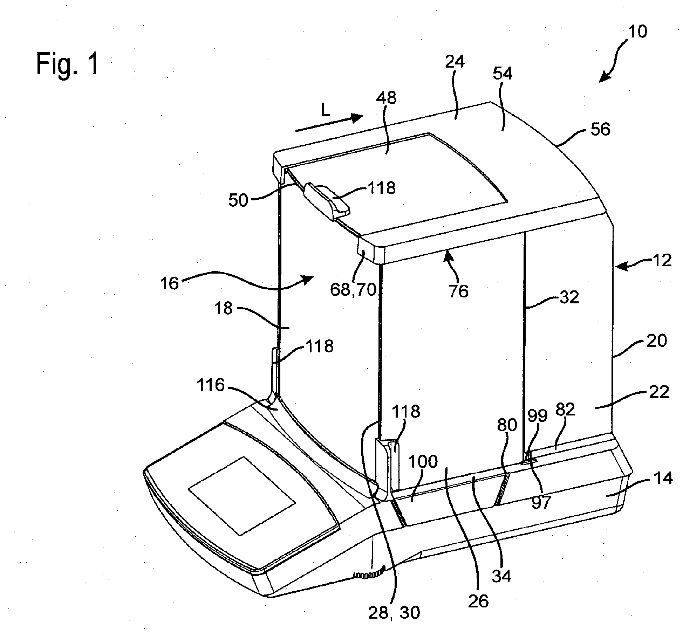

In Figur 1 ist eine Präzisionswaage 10 mit einer Wiegeeinrichtung 14 und einem Windschutz 12 gezeigt. Der Windschutz 12 dient dazu, einen Wägeraum 16 oberhalb der Wiegeeinrichtung 14 zu umgeben und so die Waagschale der Wiegeeinrichtung 14 vor äußeren Einflüssen, beispielsweise Luftbewegungen, elektrostatischen Anziehungskräften oder auch Wärmestrahlung, zu schützen und so eine genaue Messung zu gewährleisten.

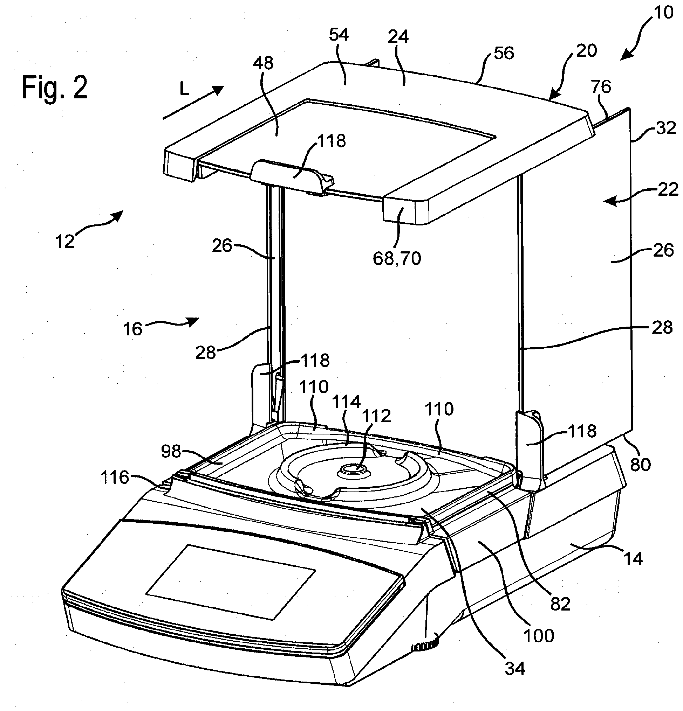

Der Windschutz 12 weist eine Frontscheibe 18, eine Rückwand 20 sowie zwei gegenüberliegende Seitenwände 22 auf. Des Weiteren ist ein Deckel 24 vorgesehen, der den Windschutz 12 nach oben hin abschließt. Die Rückwand 20 ist fest mit der Wiegeeinrichtung 14 verbunden und bildet eine Stütze für den Deckel 24. Die Seitenwände 22 weisen jeweils eine Seitenscheibe 26 auf, die zwischen einer geschlossenen und einer geöffneten Position (Figur 2) verschiebbar sind. Die Seitenscheiben 26 sowie die Frontscheibe 18 erstrecken sich vom Deckel 24 bis zur Wiegeeinrichtung 14.

In der in Figur 1 gezeigten geschlossenen Position liegen die vorderen Ränder 28 der Seitenscheiben 26 an den Seitenrändern 30 der Frontscheibe 18 an. Die hinteren Ränder 32 der Seitenscheiben 26 liegen an den Seitenwänden 22 an. Die Seitenwände 22 sind dicht mit der Rückwand 20 verbunden. Da die Seitenscheiben 26 und die Frontscheibe 18 zudem am Deckel 24 nach oben hin und an der Wiegeeinrichtung 14 nach unten hin abschließen, ist der Wägeraum 16 in der geschlossenen Position der Seitenscheiben 26 vollständig abgeschlossen.

Um den Windschutz 12 bzw. die Präzisionswaage 10 einfach reinigen zu können, sind die Seitenscheiben 26, die Frontscheibe 18, Teile des Deckels 24 sowie der Wägeraumboden 34 demontierbar ausgebildet, wie nachfolgend erläutert wird. Insbesondere können alle Teile ohne Werkzeuge demontiert werden.

Im Folgenden werden die demontierbaren Bauteile des Windschutzes 12 bzw. der Präzisionswaage 10 erläutert.

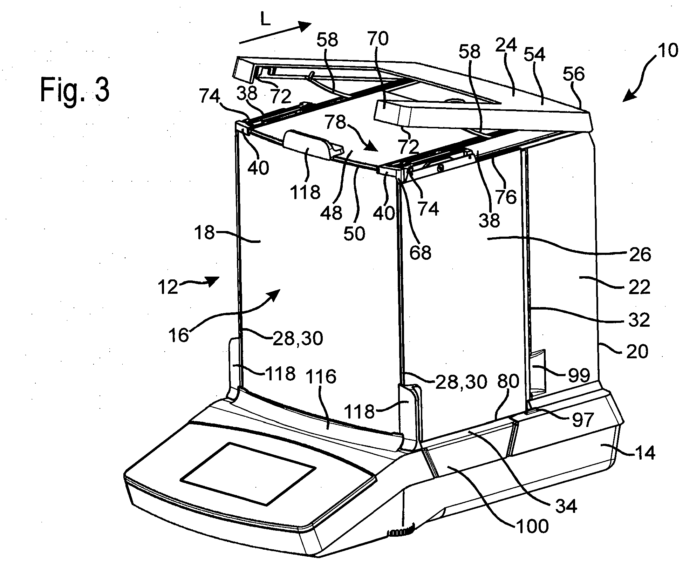

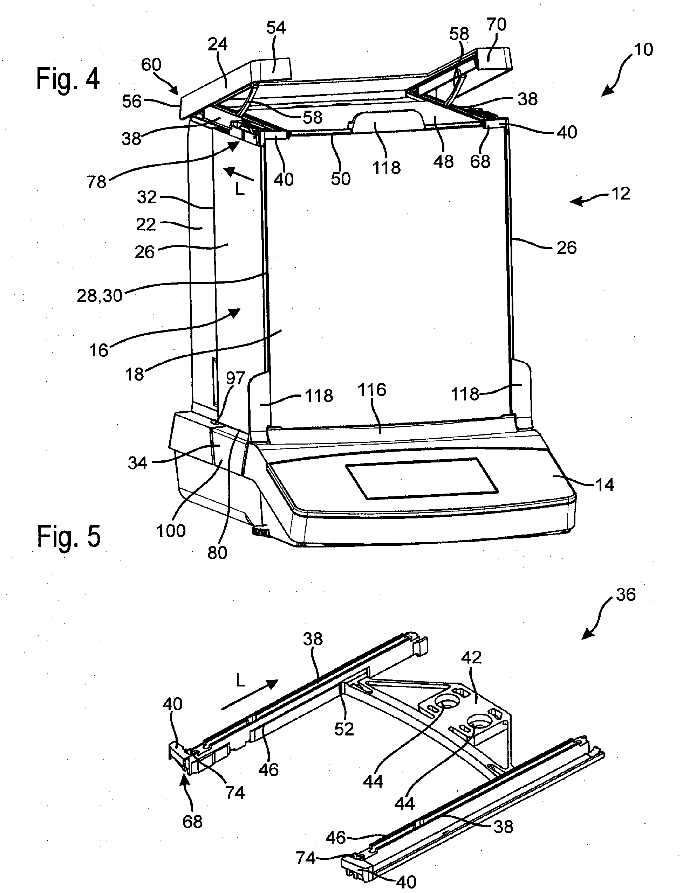

Wie in den Figuren 3 und 4 zu sehen ist, weist der Deckel 24 des Windschutzes 12 einen Trägerrahmen 36 auf, der an der Rückwand 20 gehalten ist. An diesem Trägerrahmen sind Führungsschienen 38 für die Seitenscheiben 26 sowie Halteelemente 40 für die Frontscheibe 18 vorgesehen.

Wie in Figur 5 zu sehen ist, sind die Halteelemente 40 an einem vorderen Ende der Führungsschienen 38 vorgesehen. Die beiden Führungsschienen 38 sind mit einer Haltegeometrie 42 miteinander verbunden. An dieser Haltegeometrie 42 sind Befestigungsöffnungen 44 zur Montage des Trägerrahmens 36 an der Rückwand 20 vorgesehen.

An den einander zugewandten Flächen der Führungsschienen 38 sind des Weiteren in Längsrichtung L der Führungsschienen 38 verlaufende Gleitschienen 46 vorgesehen. Auf diesen Gleitschienen 46 ist eine Deckscheibe 48 (siehe Figuren 3 und 4) gelagert, die in einer geschlossenen Position am oberen Rand 50 der Frontscheibe 18 anliegt. Um einen Zugang zum Wägeraum 16 zu schaffen, kann die Deckscheibe 48 auf den Gleitschienen 46 in Längsrichtung L verschoben werden.

Die Gleitschienen 46 bestehen vorzugsweise aus Kunststoff. Der übrige Trägerrahmen 36 kann aus Metall, beispielsweise Aluminium, oder ebenfalls aus Kunststoff bestehen. Die Deckscheibe 48 besteht beispielsweise aus Glas und hat vorzugsweise eine elektrisch leitende Beschichtung. Durch die Gleitschienen 46 aus Kunststoff ist ein Verkratzen der Deckscheibe 48 zuverlässig verhindert. Um ein elektrostatisches Aufladen der Deckscheibe 48 zu verhindern, sind im hinteren Bereich der Gleitschienen 46 am Trägerrahmen 36 elektrische Leiter 52, beispielsweise Kohlebürsten, vorgesehen, die an der Deckscheibe 48 anliegen und diese elektrisch mit dem Trägerrahmen 36 verbinden.

Um eine elektrische Aufladung des Deckels 24 zu verhindern können alle Teile des Deckels 24 entweder elektrisch leitend ausgebildet oder beschichtet, so dass elektrische Ladungen abgeleitet werden können.

Ebenso können die Frontscheibe 18, die Seitenscheiben 22 sowie alle weiteren Teile des Windschutzes 12 bzw. der Präzisionswaage 10 elektrisch leitend ausgebildet und/oder beschichtet und miteinander elektrisch verbunden sein, so dass eine elektrostatische Aufladung einzelner Teile, insbesondere der Scheibe zuverlässig verhindert ist.

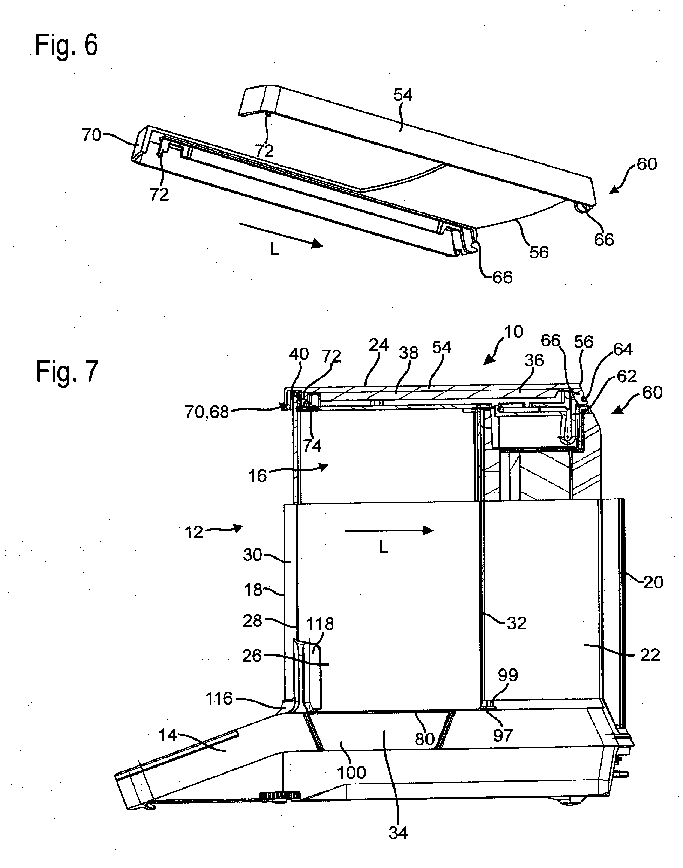

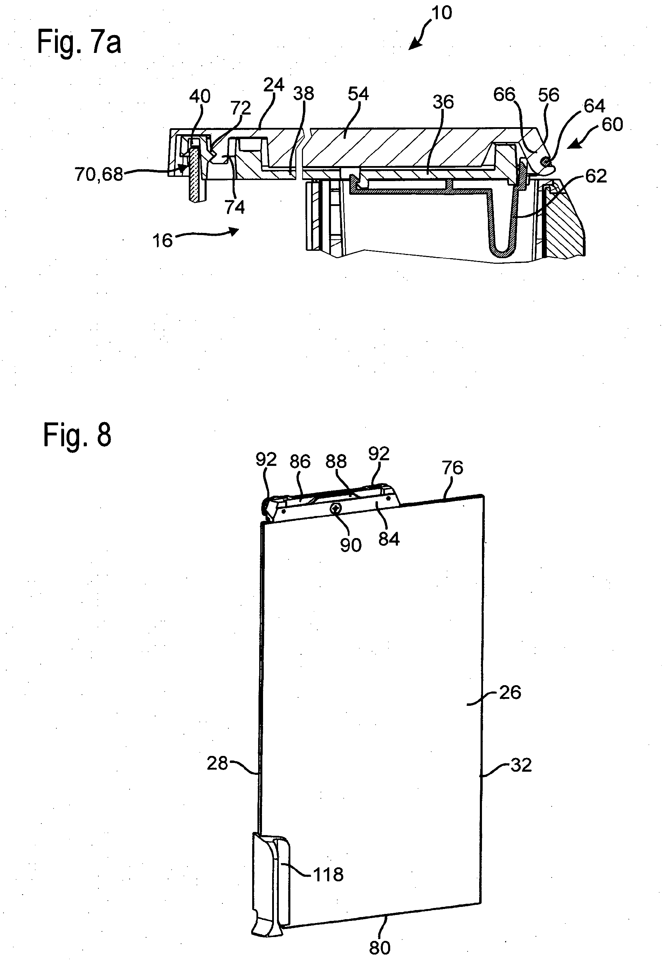

Der Deckel 24 weist des Weiteren ein Abdeckelement 54 auf, das, wie nachfolgend erläutert wird, an einem Rand 56 des Deckels 24, hier dem hinteren Rand 56, zwischen einer Haltestellung (Figur 1) und einer Freigabestellung (Figuren 3 und 4) verschwenkbar ist. Zwischen dem Trägerrahmen 36 und dem Abdeckelement 54 sind Federelemente 58 vorgesehen, die das Abdeckelement 54 in die Freigabestellung beaufschlagen.Die Lagerung 60 des Abdeckelements 54 am Trägerrahmen 36 ist durch am Trägerrahmen 36 vorgesehene Lagerungselemente 62 gebildet, die jeweils einen Lagerungsbolzen 64 aufweisen (siehe Figuren 7 und 7a). Die Lagerungselemente 62 sind in Längsrichtung L federnd nachgiebig ausgebildet. Am Abdeckelement 54 sind in Längsrichtung L, also nach hinten, offene Lagerungshaken 66 vorgesehen, die an den Lagerungsbolzen 64 eingreifen können.

Da die Lagerungselemente 62 in Längsrichtung L nachgiebig ausgebildet sind, kann das gesamte Abdeckelement 54 in Richtung zur Lagerung 60 begrenzt verschoben werden, wobei das Abdeckelement durch die federnd nachgebenden Lagerungselemente 62 in Richtung zu einem zweiten Rand 68, hier dem vorderen Rand 68 des Trägerrahmens 36, beaufschlagt wird.

Um den Deckel 24 in der geschlossenen Halteposition (Figur 7) zu halten, sind am an der Lagerung 60 gegenüberliegenden vorderen Rand 70 des Abdeckelements und am vorderen Rand 68 des Trägerrahmens Halteelemente 72, 74 vorgesehen. Die Halteelemente 72, 74 sind so ausgebildet, dass diese das Abdeckelement 54 am vorderen Rand 68 des Trägerrahmens 36 fixieren. Durch Verschieben des Abdeckelements 54 in Längsrichtung L in Richtung zur Lagerung 60 können die Halteelemente 72, 74 gelöst werden.

Wie in Figur 6 zu sehen ist, sind die Halteelemente 74 am Abdeckelement 54 durch von den Lagerungshaken 66 weg gerichtete Rastelemente gebildet. Die am Trägerrahmen 36 vorgesehenen Halteelemente 72 sind durch Rastaufnahmen gebildet, die in Richtung zur Lagerung 60 gerichtet sind. Werden die Rasthaken, also die Halteelemente 74, in Richtung zur Lagerung 60 bewegt, werden diese von den durch die Rastaufnahmen gebildeten Halteelementen 72 gelöst, so dass das Abdeckelement 54 um die Lagerung 60 herum in die Freigabestellung verschwenkt werden kann.

Die Halteelemente 72, 74 werden also beispielsweise durch einen Druck auf den vorderen Rand des Abdeckelements 54 gelöst, durch den das Abdeckelement zur Lagerung 60 verschoben wird. Anschließend wird das Abdeckelement 54 durch die Federelemente 58 in die Freigabestellung bewegt.

Selbst wenn keine Federelemente 58 vorgesehen sind, ist es auf einfache Weise möglich, die Halteelemente 72, 74 zu lösen und das Abdeckelement in die Freigabestellung zu bewegen. Zum Lösen der Halteelemente 72, 74 ist Druck auf den vorderen Rand 70 erforderlich. Nach dem Lösen der Halteelemente muss lediglich die Druckrichtung geändert und leicht nach oben gerichtet werden. In der bevorzugten Ausführungsform ist es möglich, eine nach schräg oben und in Längsrichtung L weisende Druckrichtung zu wählen, durch die eine ausreichende Druckkraft zum Lösen der Halteelemente 72, 74 aufgebracht wird und das Abdeckelement 54 anschließend ohne Änderung der Druckrichtung in die Freigabestellung bewegt wird. Somit kann das Abdeckelement in einer flüssigen Bewegung von der Haltestellung in die Freigabestellung bewegt werden. Ein aufwendiges Lösen der Halteelemente 72, 74 ist nicht erforderlich.

In der in den Figuren 3 und 4 gezeigten Freigabestellung ist es auch möglich, die Deckscheibe 48 werkzeuglos aus dem Trägerrahmen 36 zu entnehmen, indem diese nach oben aus den Gleitschienen 46 entnommen wird.

Des Weiteren können in dieser Freigabestellung, wie nachfolgend erläutert wird, die Seitenscheiben 26 des Windschutzes 12 ebenfalls werkzeuglos entfernt werden.

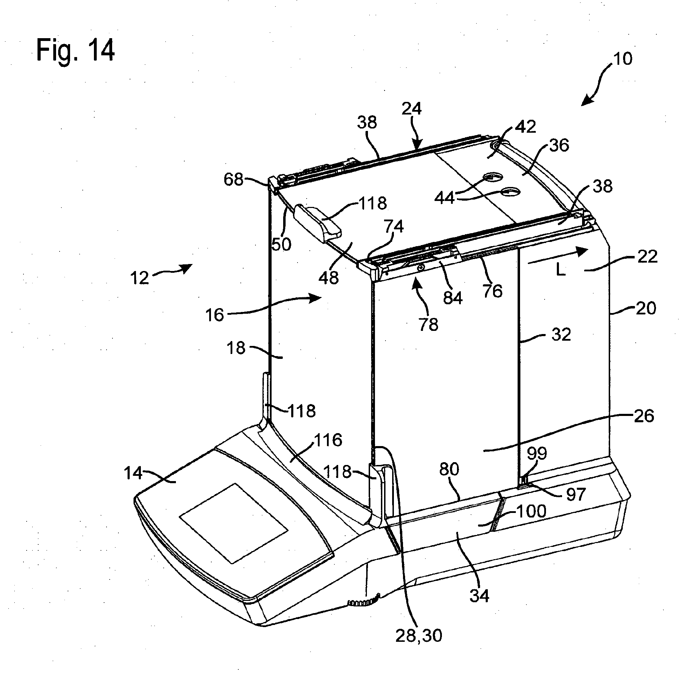

Wie in Figur 14 zu sehen ist, kann das Abdeckelement 54 nach dem Bewegen in die Freigabestellung auch vollständig entfernt werden, so dass eine einfachere Entnahme der Deckscheibe 48 und der Seitenscheiben 26 möglich ist. Diese Entnahme ist möglich, da die Lagerungshaken 66 offen ausgebildet sind, so dass diese einfach von den Lagerungsbolzen 64 gelöst werden können. In der Haltestellung werden die Lagerungshaken 66 dagegen durch die Federvorspannung der Lagerungselemente 62 gegen die Lagerungsbolzen 64 beaufschlagt, so dass ein Lösen nicht möglich ist. Die Lagerungshaken 66 können beispielsweise auch an den Lagerungsbolzen 64 verrasten, um eine zusätzliche Sicherung gegen ein Entfernen des Abdeckelements 54 bereitzustellen.

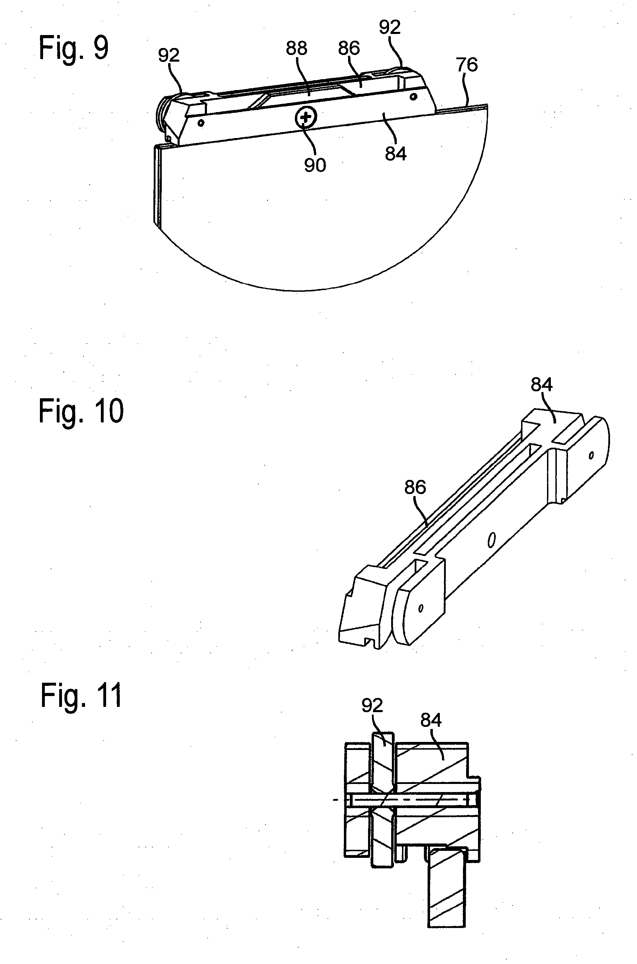

Die Lagerung der Seitenscheiben 26 erfolgt durch eine in den Figuren 8 bis 12 im Detail dargestellte, am oberen Rand 76 der Seitenscheiben 26 angeordnete Hängeführung 78 sowie eine am unteren Rand 80 der Seitenscheiben 26 vorgesehene Anlagefläche 82.

Die Hängeführungen 78 sind jeweils durch eine Führungsschiene 38 des Trägerrahmens 36 sowie durch eine Haltevorrichtung 84 gebildet, an welcher die Seitenscheibe 26 gehalten ist.

Wie in den Figuren 8 bis 11 zu sehen ist, weist die Haltevorrichtung 84 eine Aufnahme 86 für die Seitenscheibe 26 auf. Die Aufnahme 86 ist durch einen Schlitz gebildet, durch den ein Vorsprung 88 der Seitenscheibe 26 geführt ist (Figur 8). Der Vorsprung 88 ist durch eine Schraube 90 an der Aufnahme 86 fixiert. Die Schraube 90 kann die Seitenscheibe gegen die Aufnahme 86 klemmen oder sich durch die Seitenscheibe hindurch erstrecken.

An der Haltevorrichtung 84 sind des Weiteren durch Rollen gebildete Führungselemente 92 vorgesehen, mit welchen die Haltevorrichtung 84 in den Führungsschienen 38 in Längsrichtung L verschiebbar gelagert werden kann.

Die Anlagefläche 82 ist durch eine seitliche Umrandung des Wägeraumbodens 34 gebildet, wobei die Anlagefläche 82 in Längsrichtung L und im Wesentlichen vertikal verläuft.

Die Führungsschienen 38 weisen jeweils eine nach oben offene Nut 94 auf, in die die Führungselemente 92 vertikal von oben eingehängt werden können. Die Baugruppe aus der Haltevorrichtung 84 und der Seitenscheibe 26 kann in diesem montierten Zustand um die Kontaktlinie 96 zwischen Führungsschienen 38 und Führungselementen 92 verschwenkt werden.

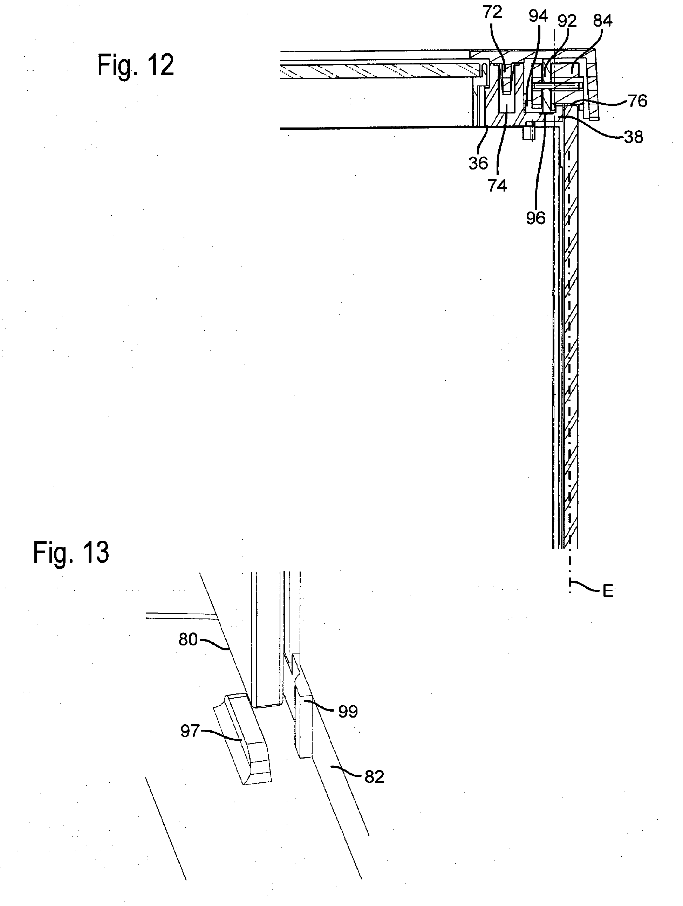

Wie in Figur 12 zu sehen ist, sind die Führungselemente 92 außerhalb der Ebene E angeordnet, die durch die Aufnahme 86 und die Seitenscheibe 26 gebildet ist. Dadurch befindet sich der Schwerpunkt der Baugruppe, die aus der Haltevorrichtung 84 und der Seitenscheibe 26 gebildet ist, bezüglich Figur 12 seitlich versetzt zur Vertikalen durch die Kontaktlinie 96. Aufgrund der Schwerkraft ist diese Baugruppe daher bestrebt, den Schwerpunkt unter die Kontaktlinie 96 zu bewegen. Dadurch wird die Seitenscheibe 26 mit dem unteren Rand 80 gegen die Anlagefläche 82 gedrückt, so dass die Seitenscheibe 26 dicht an der Anlagefläche 82 anliegt.

Da die Anlagefläche 82 in Längsrichtung L verläuft, dient diese zudem als Führung für den unteren Rand 80 der Seitenscheibe 26. Zusätzlich ist an der Anlagefläche 82 ein Führungsfortsatz 97 vorgesehen, der als Sicherung dient, um ein Abheben des unteren Randes 80 der Seitenscheibe 26 von der Anlagefläche 82 zu verhindern. Im regulären Betrieb der Präzisionswaage 10 bzw. des Windschutzes 12 ist dieser Führungsfortsatz 97 aber nicht erforderlich, da die Seitenscheibe 26 durch die Schwerkraft gegen die Anlagefläche 82 gedrückt wird.

Des Weiteren ist an der Seitenfläche 22 ein Rastanschlag 99 vorgesehen, der die Seitenscheibe 26 in der geschlossenen Position hält.

Außer der am oberen Rand 76 der Seitenscheiben 26 angeordneten Hängeführung 78 ist also keine zusätzliche, aufwendige Lagerung am unteren Rand 80 erforderlich.

Da die Führungsschienen 38 durch nach oben offene Nuten 94 gebildet sind, können die Seitenscheiben 26 auf einfache Weise vertikal nach oben aus den Führungsschienen 38 entnommen werden.

Auch die Montage der Seitenscheiben 26 ist vereinfacht, da diese lediglich mit den Haltevorrichtungen 84 bzw. den Führungselementen 92 in die Führungsschienen 38 eingehängt werden müssen. Aufgrund der Schwerkraft gelangen die unteren Ränder 80 selbständig mit den Anlageflächen 82 in Anlage. Eine aufwendige Ausrichtung der unteren Ränder 80 oder ein Einfädeln in eine untere Führung ist nicht erforderlich.

Um die Entnahme der Seitenscheiben 26 im normalen Betrieb des Windschutzes 12 zu verhindern, deckt das Abdeckelement 54 in der Haltestellung die Führungsschienen 38 vertikal nach oben ab. Die Führungselemente 92 können so nicht aus den Führungsschienen entnommen werden. Um die Seitenscheiben 26 entnehmen zu können, ist es erforderlich, das Abdeckelement 54 in die Freigabestellung zu bewegen, in der die Führungsschienen 38 vertikal nach oben geöffnet sind.

Unabhängig von der Ausführung der Haltevorrichtung bzw. der Führungselemente 92 ist es lediglich erforderlich, dass die Führungselemente 92 außerhalb der durch die Seitenscheibe 26 bzw. die Aufnahmen 86 gebildeten Ebene angeordnet sind, so dass die Seitenscheibe um die Kontaktlinie 96 zwischen Führungsschiene 38 und Führungselement 92 gegen die Anlagefläche 82 kippen kann.

Um ein Kippen in der Ebene der Seitenscheiben 26 zu verhindern, können an einer Seitenscheibe 26 auch mehrere Haltevorrichtungen 84 vorgesehen sein.

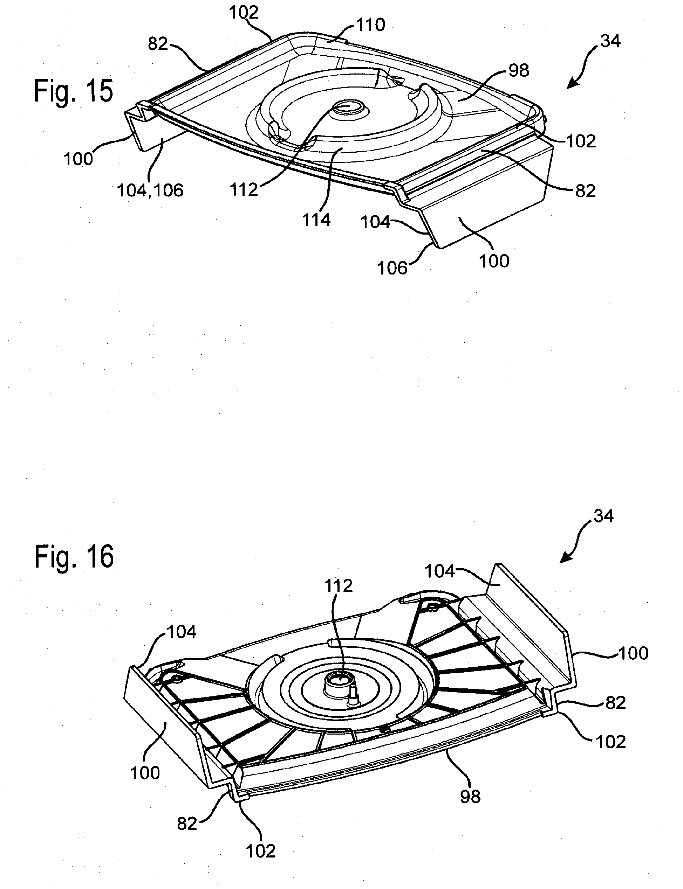

Wie in den Figuren 15 bis 18 zu sehen ist, sind die Anlageflächen 82 am Wägeraumboden 34 der Präzisionswaage 10 angeordnet. Neben dem Deckel 24, den Seitenscheiben 26 und der Frontscheibe 18 ist auch der Wägeraumboden 34 demontierbar ausgeführt, so dass auch dieser zum Reinigen aus der Präzisionswaage 10 entnommen werden kann.

Der Wägeraumboden 34 hat dazu einen Wägebodenabschnitt 98 sowie zwei Seitenwangen 100. Die Seitenwangen 100 befinden sich an gegenüberliegenden Rändern 102 des Wägebodenabschnitts 98 und sind im Wesentlichen senkrecht zum Wägebodenabschnitt 98 und parallel zueinander angeordnet.

An den einander zugewandten Innenflächen 104 befinden sich Befestigungsvorrichtungen 106, die in dieser Ausführungsform durch Rastelemente gebildet sind. Am Gehäuse der Wiegeeinrichtung 14 sind im Wesentlichen horizontal verlaufende Rastkanten 108 vorgesehen, an welchen die Befestigungsvorrichtungen 106 eingreifen können.

Der Wägeraumboden 34 wird vertikal von oben auf die Wiegeeinrichtung 14 aufgesetzt, wobei die Seitenwangen 100 das Gehäuse an gegenüberliegenden Seiten umgreifen. Der Wägeraumboden 34 wird auf das Gehäuse aufgeschoben, bis die Befestigungsvorrichtungen 106 an den Rastkanten 108 verrasten. Die Seitenwangen 100 sind federnd nachgiebig ausgebildet, so dass diese beim Aufschieben auf die Rastkanten nachgeben können. Befinden sich die Befestigungsvorrichtungen 106 hinter den Rastkanten, werden die Seitenwangen 100 federnd gegen das Gehäuse gedrückt, so dass die Befestigungsvorrichtungen 106 an den Rastkanten 108 verrasten.

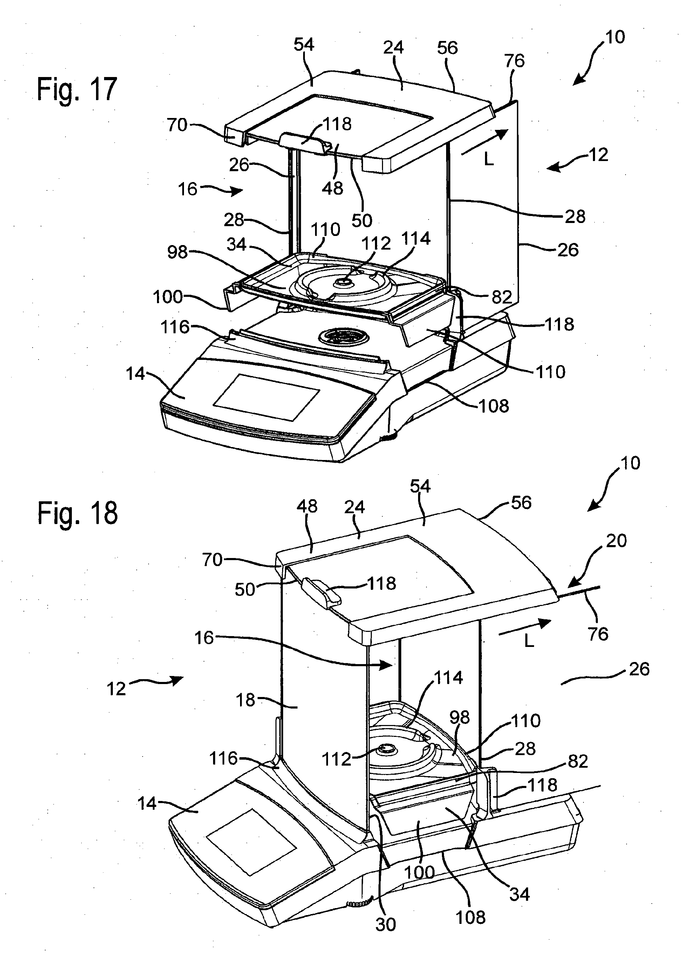

Zur Demontage des Wägeraumbodens 34 werden die Seitenwangen 100 seitlich weggezogen, bis die Befestigungsvorrichtungen 106 von den Rastkanten 108 gelöst sind. Anschließend kann der Wägeraumboden 34 nach oben vom Gehäuse abgezogen werden (Figur 18).

Wie in den Figuren 15 und 17 zu sehen ist, sind die Anlageflächen 82 für die Seitenscheiben 26 jeweils durch einen an den Seitenwangen 100 vorgesehenen Absatz gebildet, auf dem auch der Führungsfortsatz 97 vorgesehen ist. Abhängig von der Form des Gehäuses und des Wägeraumbodens 34 ist ein solcher Absatz aber nicht erforderlich.

Der Wägebodenabschnitt 98 ist im Wesentlichen eben ausgebildet (Figur 15), wobei die umlaufenden Ränder 110 gegenüber dem übrigen Wägebodenabschnitt 98 erhöht sind. Mittig befindet sich eine Durchtrittsöffnung 112 für eine nicht im Detail dargestellte Wägetechnik. Um diese Durchtrittsöffnung 112 ist ebenfalls ein erhöhter Rand 114 ausgebildet.

Die erhöhten Ränder 110, 114 verhindern, dass Flüssigkeiten, die auf den Wägebodenabschnitt 98 gelangt sind, aus dem Wägeraumboden 34 heraus fließen und beispielsweise durch die Durchtrittsöffnung 112 zur Wägetechnik fließen und diese verschmutzen können.

Wie in den Figuren 16 und 17 zu sehen ist, bilden die Seitenwangen 100 des Wägeraumbodens 34 abschnittsweise die Seitenwände 22 des Windschutzes 12. Da zwischen den Seitenwänden und dem Wägebodenabschnitt 98 somit kein Spalt vorhanden ist, können Flüssigkeiten oder Fremdkörper, die auf den Wägeraumboden 34 gelangt sind, nicht in das Gehäuse eindringen und die Wägetechnik verschmutzen.

Wie in den Figuren 17 und 18 zu sehen ist, kann neben den Seitenscheiben 26, dem Deckel 24 und dem Wägeraumboden 34 auch die Frontscheibe 18 aus den Halteelementen 40 und einer Halteschiene 116 entnommen werden. Die Halteelemente 40 sind dazu in vertikaler Richtung begrenzt federnd nachgiebig ausgebildet, so dass diese zur Entnahme der Frontscheibe 18 nach oben angehoben werden können.

Somit können annähernd alle Teile des Windschutzes 12 werkzeuglos demontiert werden, wodurch eine einfache Reinigung des Windschutzes 12 bzw. der Präzisionswaage 10 sowie ein einfacher Zugang zum Wägeraum 16 möglich sind.

Um die Scheiben, also die Deckscheibe 48, die Seitenscheibe 26 sowie die Frontscheibe 18 einfach reinigen zu können, können an den Scheiben vorhandene Bauteile, beispielsweise Griffe 118 oder die Haltevorrichtungen 84 ebenfalls einfach, vorzugsweise werkzeuglos, demontiert werden. Insbesondere können die Griffe 118 einfach an den Scheiben verrastet sein, wobei ein werkzeugloses Lösen dieser Verrastung möglich ist.

## Patentansprüche

1. Windschutz (12) für eine Präzisionswaage (10), der einen Wägeraum (16) umgibt, mit zumindest einer Seitenscheibe (26), und einer Hängeführung (78) für die Seitenscheibe, wobei die Hängeführung (78) eine Führungsschiene (38) und eine in der Führungsschiene (38) verschiebbar gelagerte Haltevorrichtung (84) für die Seitenscheibe (26) aufweist, wobei die Haltevorrichtung (84) eine Aufnahme (86) für die Seitenscheibe (26) aufweist sowie zumindest ein Führungselement (92), das in die Führungsschiene (38) eingreift und in dieser verschiebbar gelagert ist, wobei die Seitenscheibe mit einem oberen Rand (76) in der Haltevorrichtung (84) der Hängeführung (78) gehalten ist, **dadurch gekennzeichnet, dass** das Führungselement (92) bezüglich des Wägeraumes (16) nach innen versetzt außerhalb einer Ebene (E) angeordnet ist, die durch die Aufnahme (86) der Seitenscheibe (26) definiert ist, und dass die Haltevorrichtung (84) um eine Kontaktlinie (96) zwischen Führungselement (92) und Führungsschiene (38) verschwenkbar in der Führungsschiene (38) gelagert ist, wobei die Ebene (E) der Seitenscheibe (26) bezüglich des Wägeraumes (16) nach außen versetzt zur Führungsschiene (38) angeordnet ist.

2. Windschutz nach Anspruch 1, **dadurch gekennzeichnet, dass** eine Anlagefläche (82) vorgesehen ist, an der der untere Rand (80) der Seitenscheibe (26) anliegen kann, wobei die Anlagefläche (82) parallel zur Ebene (E) der Seitenscheibe (26) angeordnet ist.

3. Windschutz nach Anspruch 2, **dadurch gekennzeichnet, dass** die Anlagefläche (82) bezüglich einer Vertikalen durch die Führungsschiene (38) in Richtung zur Seitenscheibe (26) versetzt angeordnet ist, so dass die Seitenscheibe (26) durch die Schwerkraft gegen die Anlagefläche (82) gedrückt wird.

4. Windschutz nach einem der Ansprüche 2 und 3, **dadurch gekennzeichnet, dass** an der Anlagefläche (82) ein Führungsfortsatz (97) vorgesehen ist, der den unteren Rand (80) der Seitenscheibe (26) an der Anlagefläche (82) hält.

5. Windschutz nach einem der Ansprüche 2 bis 4, **dadurch gekennzeichnet, dass** der Windschutz (12) einen Deckel (24) aufweist und die Führungsschienen (38) am Deckel (24) vorgesehen sind.

6. Windschutz nach einem der vorhergehenden Ansprüche, **dadurch gekennzeichnet, dass** die Seitenscheibe (26) und/oder die Hängeführung (78) elektrisch leitend ausgebildet und/oder beschichtet sind und miteinander elektrisch leitend gekoppelt sind.

7. Windschutz nach einem der vorhergehenden Ansprüche, **dadurch gekennzeichnet, dass** die Führungsschiene (38) eine nach oben offene Nut (94) aufweist, in die das zumindest eine Führungselement (92) von oben eingehängt ist.

8. Windschutz nach einem der vorhergehenden Ansprüche, **dadurch gekennzeichnet, dass** die Führungselemente (92) Rollen sind, die auf der Führungsschiene (38) abrollen.

9. Windschutz nach einem der vorhergehenden Ansprüche, **dadurch gekennzeichnet, dass** ein Abdeckelement (54) vorgesehen ist, das die Führungsschienen (38) abdeckt.

## Claims

1. Wind protection (12) for a precision scale (10), which surrounds a weighing chamber (16), with at least one side panel (26), and a suspension guide (78) for the side panel, wherein the suspension guide (78) has a guide rail (38) and a mounting device (84) for the side panel (26) displaceably mounted in the guide rail (38), wherein the mounting device (84) has a receptacle (86) for the side panel (26) and at least one guide element (92), which engages in the guide rail (38) and is displaceably mounted in it, wherein the side panel is held with an upper edge (76) in the mounting device (84) of the suspension guide (78), **characterized in that** the guide element (92) is arranged offset to the inside outside of a plane (E) with respect to the weighing chamber (16), said plane being defined by the receptacle (86) of the side panel (26), and that the mounting device (84) is pivotably mounted in the guide rail (38) about a contact line (96) between guide element (92) and guide rail (38), wherein the plane (E) of the side panel (26) is arranged offset to the outside to the guide rail (38) with respect to the weighing chamber (16).

2. The wind protection according to claim 1, **characterized in that** a contact surface (82) is provided, on which the lower edge (80) of the side panel (26) can abut, wherein the contact surface (82) is arranged parallel to the plane (E) of the side panel (26).

3. The wind protection according to claim 2, **characterized in that** the contact surface (82) is arranged offset with respect to a vertical through the guide rail (38) in the direction toward the side panel (26), so that the side panel (26) is pressed by the force of gravity against the contact surface (82).

4. The wind protection according to any of claims 2 and 3, **characterized in that** a guide extension (97) is provided on the contact surface (82), which holds the lower edge (80) of the side panel (26) on the contact surface (82).

5. The wind protection according to any of claims 2 to 4, **characterized in that** the wind protection (12) has a cover (24) and the guide rails (38) are provided on the cover (24).

6. The wind protection according to any of the preceding claims, **characterized in that** the side panel (26) and/or the suspension guide (78) are configured to be electrically conductive and/or are coated and coupled in electrically conductive manner to each other.

7. The wind protection according to any of the preceding claims, **characterized in that** the guide rail (38) has a groove (94) that is open on top, into which the at least one guide element (92) is suspended from above.

8. The wind protection according to any of the preceding claims, **characterized in that** the guide elements (92) are rollers, which roll on the guide rail (38).

9. The wind protection according to any of the preceding claims, **characterized in that** a covering element (54) is provided, which covers the guide rails (38).

## Revendications

1. Pare-vent (12) pour une balance de précision (10), qui entoure une chambre de pesée (16), avec au moins un panneau latéral (26), et un guidage en suspension (78) pour le panneau latéral, dans lequel le guidage en suspension (78) présente un rail de guidage (38) et un dispositif de retenue (84), pour le panneau latéral (26), monté de façon déplaçable dans le rail de guidage (38), dans lequel le dispositif de retenue (84) présente un logement (86) pour le panneau latéral (26), ainsi qu'au moins un élément de guidage (92) qui vient en prise dans le rail de guidage (38) et est monté de façon déplaçable dans celui-ci, dans lequel le panneau latéral est retenu avec un bord supérieur (76) dans le dispositif de retenue (84) du guidage en suspension (78), **caractérisé en ce que** l'élément de guidage (92) est agencé, relativement à la chambre de pesée (16), de façon décalée vers l'intérieur et à l'extérieur d'un plan (E) qui est défini par le logement (86) du panneau latéral (26), et **en ce que** le dispositif de retenue (84) est monté en pivotement dans le rail de guidage (38) autour d'une ligne de contact (96) entre l'élément de guidage (92) et le rail de guidage (38), dans lequel le plan (E) du panneau latéral (26) est agencé, relativement à la chambre de pesée (16), de façon décalée vers l'extérieur par rapport au rail de guidage (38).

2. Pare-vent selon la revendication 1, **caractérisé en ce qu'**est prévue une surface d'appui (82) contre laquelle le bord inférieur (80) du panneau latéral (26) peut s'appuyer, dans lequel la surface d'appui (82) est agencée en parallèle du plan (E) du panneau latéral (26).

3. Pare-vent selon la revendication 2, **caractérisé en ce que** la surface d'appui (82), relativement à une verticale, est agencée de façon décalée par le rail de guidage (38) en direction du panneau latéral (26), de sorte que le panneau latéral (26) soit pressé contre la surface d'appui (82) par la pesanteur.

4. Pare-vent selon l'une des revendications 2 et 3, **caractérisé en ce que** contre la surface d'appui (82) est prévu un prolongement de guidage (97) qui retient le bord inférieur (80) du panneau latéral (26) contre la surface d'appui (82).

5. Pare-vent selon l'une des revendications 2 à 4, **caractérisé en ce que** le pare-vent (12) présente un couvercle (24) et les rails de guidage (38) sont prévus contre le couvercle (24).

6. Pare-vent selon l'une des revendications précédentes, **caractérisé en ce que** le panneau latéral (26) et/ou le guidage en suspension (78) sont conçus et/ou enrobés de façon électriquement conductrice et sont couplés l'un à l'autre de façon électriquement conductrice.

7. Pare-vent selon l'une des revendications précédentes, **caractérisé en ce que** le rail de guidage (38) présente une rainure (94) ouverte vers le haut dans laquelle le au moins un élément de guidage (92) est suspendu depuis le haut.

8. Pare-vent selon l'une des revendications précédentes, **caractérisé en ce que** les éléments de guidage (92) sont des rouleaux qui roulent sur le rail de guidage (38).

9. Pare-vent selon l'une des revendications précédentes, **caractérisé en ce qu'**est prévu un élément de recouvrement (54) qui recouvre les rails de guidage (38).
